# EUROPEAN PATENT APPLICATION

(11) **EP 4 745 803 A1**
(43) Date of publication of application: **20.05.2026**
(21) Application number: 25213620.5
(22) Date of filing: 05.11.2025
(51) Int. Cl.: G06F 17/15, G06F 17/18, G06F 18/40, G06N 3/08

(54) **ADAPTIVE DATASET REDUCTION FOR NEURAL NETWORKS**

(30) Priority: 14.11.2024 US 202418947568
(71) Applicant: NXP USA, Inc., Austin, TX 78735 (US)
(72) Inventor: Hillier, Curtis, 5656AG Eindhoven (NL); McDaniel, Tristan Hayden, 5656AG Eindhoven (NL)
(74) Representative: Miles, John Richard

(57) **Abstract**

Systems and methods for providing adaptive dataset reduction for neural networks. In an illustrative, non-limiting embodiment, a delta-sigma modulator may include a Systems-on-Chip (SoC) having a processor and a memory coupled to the processor, the memory having program instructions stored thereon that, upon execution, cause the processor to: reduce a dataset received from a sensor; and as the dataset is received, at least one of: in response to an anomaly in the dataset being present in the reduced dataset, indicate a pass; or in response to the anomaly in the dataset being absent from the reduced dataset, indicate an error.

## Description

### Field

This disclosure relates generally to electronic circuits, and more specifically, to systems and methods for providing adaptive dataset reduction for neural networks.

### Background

In many industries, telemetry data collection and management are essential for effective decision-making and predictive analytics. As systems evolve, the volume of data generated by sensors increases, necessitating efficient storage, transmission, and processing. This is particularly relevant in fields such as automotive, industrial automation, and robotics, where real-time data is vital.

In the automotive sector, for example, vehicles produce extensive on demand data related to driving characteristics, speed, battery charge, current, and voltage. This data is crucial for training neural networks used in applications like predictive maintenance and autonomous driving.

### Brief Description of the Drawings

The present disclosure is illustrated by way of example and is not limited by the accompanying figures, in which like references indicate similar elements. Elements in the figures are illustrated for simplicity and clarity and have not necessarily been drawn to scale.
FIG. 1 is a diagram of an example of an electronic device, according to some embodiments.
FIG. 2 is a block diagram of an example of a system for providing adaptive dataset reduction for neural networks, according to some embodiments.
FIG. 3 is a flowchart of an example of a method for providing adaptive dataset reduction for neural networks, according to some embodiments.

### Detailed Description

Telemetry data collection refers to the process of acquiring and transmitting information from remote or inaccessible locations to a receiving system for monitoring and analysis. It employs various technologies, such as sensors and communication networks, to efficiently gather and relay data. Telemetry is widely used across industries like automotive, industrial automation, and robotics, where real-time insights are essential for decision-making and predictive analytics.

In automotive applications, vehicles generate substantial data on driving behavior, speed, battery status, current, and voltage. This data is vital for training neural networks used in predictive maintenance and autonomous driving. In industrial automation, telemetry helps monitor equipment health and optimize operations. In robotics, it supports machine learning, enhancing performance and adaptability.

However, capturing raw data from vehicles, industrial systems, and other sources presents scaling and storage challenges. As data volume grows with the number of connected devices, storage and transmission costs can rise sharply, leading to budget overruns. Large datasets also increase training times and computational demands for neural networks, as well as cloud storage expenses.

Many current solutions collect raw data in large quantities without optimization, resulting in inefficiencies, high storage costs, and extended processing times. Additionally, the lack of built-in quality assessment mechanisms means data integrity and relevance are not always guaranteed, which can compromise the effectiveness of neural network training.

In that regard, efficient data management strategies aim to reduce storage and transmission costs while preserving data quality. Techniques such as direct compression and frequency domain analysis may be used to manage large datasets. However, these methods often fall short in ensuring the quality and integrity of the reduced data, risking the loss of critical information.

To address these, and other concerns, systems and methods described herein may reduce dataset size while incorporating mechanisms to assess and ensure the quality of the reduced data. In some implementations, these systems and methods may be configured to detect anomalies and stress correlations, providing a more reliable and efficient data management solution for neural network training.

For example, an online data set reducer may receive inputs from sensors in an automobile or other appliance, then reduce the dataset size using techniques such as direct compression, frequency domain analysis, and randomized time domain under-sampling. An anomaly detector and a stress correlator may assess reduced data set quality and trigger higher resolution captures of signal input data. Furthermore, event triggers may be configured to capture and reduce or increase datasets around anomalous and high-stress events, ensuring significant events are not lost during the data reduction process, and maintaining the quality and accuracy of the reduced dataset.

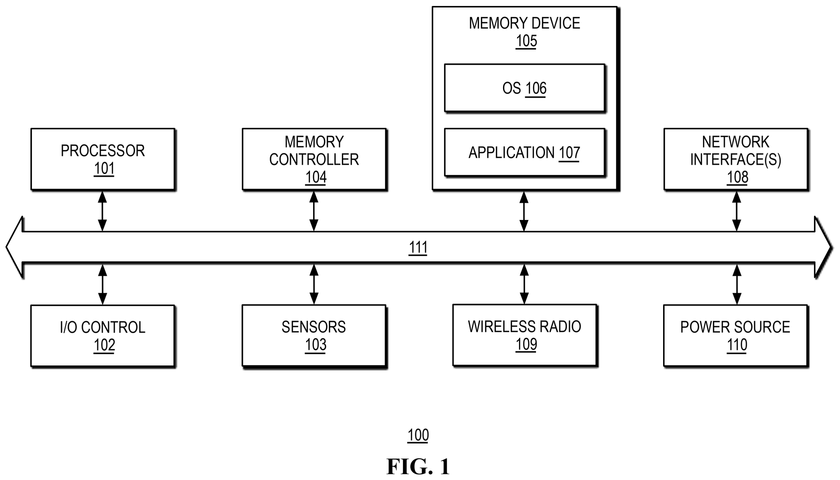

In various embodiments, systems and methods described herein may provide adaptive dataset reduction for neural networks in any System on Chip (SoC) or electronic device-an example of which is illustrated FIG. 1. Particularly, FIG. 1 shows a non-limiting example of electronic device 100 where adaptive dataset reduction for neural networks may be implemented. In various embodiments, device 100 may be integrated with electronic circuitry, microprocessors, microcontrollers, memory, input output (I/O) logic control, communication interfaces and components, as well as other hardware, firmware, or software. Moreover, one or more components of device 100 may be part of an SoC, or the like.

Device 100 includes processor 101 (*e.g.,* a controller, a microcontroller, a digital signal processor, etc.) configured to execute program instructions stored in memory device 105 for implementing various systems and methods described herein. Processor 101 may include components of an integrated circuit, programmable logic device, a logic device formed using one or more semiconductors, and other implementations in silicon or hardware.

In some cases, processor 101 may include two domains: (i) a low-power microprocessor, core, or domain, and (ii) a high-power microprocessor, core, or domain. The high-power microprocessor may execute computationally intensive operations, whereas the low-power microprocessor may manage simpler processes, such as detecting inputs from one or more sensors. The low-power processor may also wake or initialize the high-power processor for computationally intensive processes. More generally, processor 101 may include any number of such domains.

In device 100, data bus 111 couples its various components and enables data communication between those components. Data bus 111 may be implemented as any suitable combination of one or more bus structures or bus architectures. Device 100 also includes power source 110, such as a battery or an AC-DC power supply.

Sensors 103 may be implemented to detect various properties such as acceleration, temperature, humidity, water, supplied power, proximity, external motion, device motion, sound signals, ultrasound signals, light signals, fire, smoke, carbon monoxide, Global-Positioning-Satellite (GPS) signals, radio frequency (RF), other electromagnetic signals or fields, or the like. As such, sensors 103 may include any one or a combination of temperature sensors, humidity sensors, hazard-related sensors, other environmental sensors, accelerometers, microphones, optical sensors up to and including cameras (e.g., charged coupled-device or video cameras, active or passive radiation sensors, GPS receivers, and RF identification (ID) detectors).

Memory controller 104 and memory device 105 may implement any type of nonvolatile memory or other suitable electronic storage device. Device 100 may include various firmware or software, such as Operating System (OS) 106 maintained as computer executable instructions in memory 105 and executed by processor 101. Moreover, application 107 may include a distance estimation application that implements various aspects of the systems and methods described herein.

Input-output (I/O) control 102 may be configured to receive input from a user or provide information to the user. For example, I/O control 102 may also include mechanical or virtual components that respond to a user input. For example, the user can mechanically move a sliding or rotatable component, or the motion along a touchpad may be detected, and may correspond to a setting of device 100.

Device 100 includes network interfaces 108, such as a mesh network interface for communication with other devices in a wireless mesh network, and an external network interface for network communication, such as via the Internet. Wireless radio system 109 may be used for wireless communication with other devices via network interface 108 and for multiple, different wireless communications systems. For instance, radio system 109 may include a radio device, antenna, and chipset implemented for any given wireless communications technology, such as, for example, Wi-Fi, BLUETOOTH (BT), BT Low-Energy (BLE), Mobile Broadband, point-to-point IEEE 802.15.4, etc.

In some implementations, device 100 may incorporate one or more adaptive dataset reduction systems and methods described herein. For example, processor 101 may execute program instructions stored in memory device 105, enabling the reduction of datasets received from sensors 103. Data bus 111 may allow seamless data communication between the processor, memory, and sensors. Memory controller 104 may be configured to handle dataset storage and retrieval, ensuring that reduced datasets are efficiently stored in memory device 105. Furthermore, network interfaces 108 and wireless radio system 109 may enable device 100 to communicate with external networks, facilitating the transmission of reduced datasets to cloud-based systems or other devices.

As used herein, the term "anomaly" generally refers to any deviation from an expected pattern or behavior within a dataset. In some cases, anomalies may manifest as sudden spikes, drops, or irregular patterns that do not conform to established norms, indicating unusual events, errors, or significant changes in the monitored system.

The term "stress" generally refers to the cumulative impact of various factors on a system over time, affecting its performance or integrity. In some cases, stress may be quantified through metrics that assess the load, pressure, or strain experienced by the system, aiding in understanding the long-term effects of operational conditions and identifying potential areas of concern that may lead to degradation or failure. As used herein, "stress correlation" refers to the process of analyzing and quantifying the cumulative impact of stress factors on a system to ensure accurate data representation.

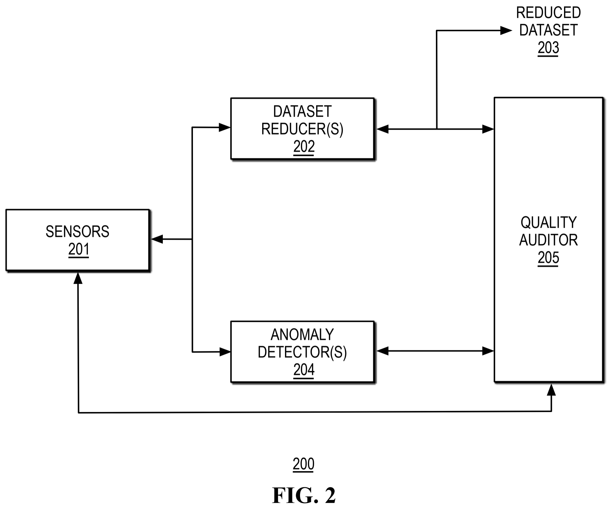

FIG. 2 is a block diagram of an example of system 200 for providing adaptive dataset reduction for neural networks, for example, as implemented by device 100. In system 200, sensors 201 may capture or produce a dataset, and provide it to dataset reducer(s) 202.

Sensors 201 may include various types, such as temperature, humidity, or motion sensors, providing diverse data for analysis. Additionally, or alternatively, sensor(s) 201 may include at least one of: a temperature sensor, a humidity sensor, an accelerometer, a microphone, an optical sensor, a GPS receiver, an RF identification detector, etc. Additionally, or alternatively, sensor(s) 201 may be part of an onboard diagnostics device, a vehicle dynamics device, a powertrain device, an infotainment device, etc. In some cases, these inputs may be received via a Controller Area Network (CAN) or Ethernet connection.

Dataset reducer(s) 202 may process the dataset received from sensors 201 and produce another dataset 203 have a reduced size (a "reduced dataset"). In some cases, reduced dataset 203 may be stored in memory, provided to a neural network training complex, or transmitted to a cloud repository. Sensors 201 may also provide the original dataset to anomaly detector(s) 204. Anomaly detector(s) 204 may process the dataset received from sensors 201 and detect one or more anomalies in it.

Dataset reducer(s) 202 receive inputs from sensors and apply various techniques to decrease the size of the dataset. These techniques may include, but are not limited to: direct compression, which reduces data redundancy; frequency domain analysis, which transforms data to highlight significant patterns; and randomized time domain under-sampling, which selectively captures data points. Additional methods may involve Principal Component Analysis (PCA) for dimensionality reduction, wavelet transforms for multi-resolution analysis, and clustering algorithms to group similar data points, as well as machine learning algorithms such as XGBoost and Random Cut Forest for more granular features.

In various implementations, dataset reducer(s) 202 may aim to maintain the integrity of the data while minimizing the size, ensuring that information is preserved for subsequent processing or analysis. Each of dataset reducer(s) 202 may be chosen based on the specific requirements of the application. In some cases, two or more dataset reducer(s) 202 may be placed in series, one after the other, in a selected order. A reduced dataset may then be stored, transmitted, or used for neural network training, optimizing storage and computational resources.

Meanwhile, anomaly detector(s) 204 analyze the dataset to identify deviations from expected patterns or behaviors. Such detectors may implement techniques including, but not limited to: threshold-based detection, which flags data points exceeding predefined limits; wavelet transform, which detects changes in frequency components; and moving average filtering, which smooths data to highlight anomalies. Other methods may involve machine learning algorithms like Isolation Forest and One-Class SVM, which learn normal data patterns and identify outliers. Neural network-based approaches, such as Autoencoders and LSTM networks, may also be employed to detect complex anomalies in time-series data. Additionally, stress correlation techniques such as the Arrhenius equation and rainflow counting may be used to assess cumulative stress.

Quality auditor 205 may be configured to evaluate reduced dataset 203 against any anomalies detected in the original dataset by anomaly detector(s) 204.

In some cases, if anomalies are not detected in the original dataset, or if an anomaly in the original dataset is also present in reduced dataset 203, system 200 may continue to operate without changes-e.g., such that sensors 201 continue to run with their native sampling settings and/or dataset reducer(s) 202 continue to use a same dataset reduction rate or settings.

In other cases, if an anomaly in the original dataset is absent from the reduced dataset 203, or if the anomaly is present in the reduced dataset but to a lesser degree (below a threshold value), quality auditor 205 may adaptively change the operation of sensor(s) 201, dataset reducer(s) 202, or anomaly detector(s) 204.

For example, quality auditor 205 may control dataset reducer(s) 202 to decrease a rate of dataset reduction (e.g., compression, downsampling, etc.), in response to the original dataset's anomaly being absent from the reduced dataset, or in response to the anomaly being present but not representative of its magnitude (or any other selected characteristic, such as timing, phase, noise, interference, errors, etc.) in the original dataset.

Later, quality auditor 205 may increase the rate of reduction (e.g., back to a native or previous rate of dataset reduction), in response to a subsequently detected anomaly in the dataset being absent from the reduced dataset, or the anomaly present and representative of its magnitude in the original dataset.

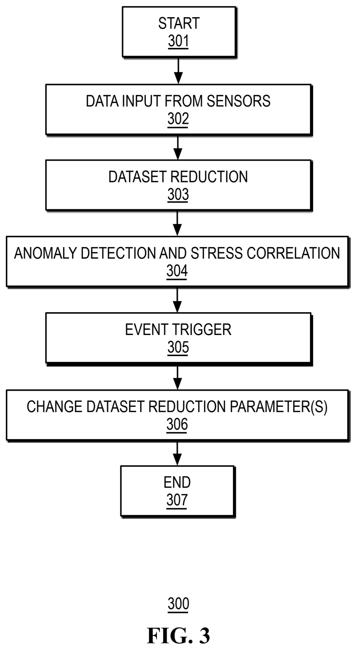

FIG. 3 is a flowchart of an example of method 300 for providing adaptive dataset reduction for neural networks, for example, as implemented by device 100. Method 300 begins at 301. At 302, data inputs are received from sensor 201.

At 303, method 300 may involve performing a dataset reduction operation using techniques such as direct compression, frequency domain analysis, or randomized time domain under-sampling, to name a few. These techniques may be configured reduce or minimize data size while preserving essential information for neural network training. In some cases, operation 302 may be performed, at least in part, by dataset reducer(s) 202.

At 304, method 300 may include performing an anomaly detection or stress correlation operation. Anomaly detection may utilize algorithms such as threshold-based detection, wavelet transform, or machine learning models like Isolation Forest and LSTM networks. Conversely, stress correlation may involve assessing cumulative stress using methods like the Arrhenius equation or rainflow counting, to ensure the reduced dataset accurately reflects the original data's stress characteristics. In some cases, operation 303 may be performed, at least in part, by anomaly detector(s) 204.

At 305, method 300 may trigger one or more events, such as adjusting the rate of dataset reduction, selecting different dataset reducers, the order of serial reducers, anomaly detectors, turning sensor(s) 201 on or off, modifying sensor sampling rates or bit depth, etc. These events may be triggered may be based on a comparison between anomalies in the original dataset and the reduced dataset by quality auditor 205 such that, if discrepancies are detected, method 300 may dynamically adjust its operations.

Particularly, at 306, method 300 may adaptively control the dataset reduction operation based on the comparison results, for example, by changing one or more data reduction parameter(s) (e.g., downsampling, filtering, etc.). Such adaptive control may be configured so that the reduced dataset remains representative of the original data, optimizing storage and computational resources while maintaining accuracy and reliability for neural network training. In some cases, operation 305 may be performed, at least in part, by quality auditor 205. Method 300 ends at 307.

In some cases, quality auditor 205 may be configured to manage storage in electronic device 100 to enhance the system 200's efficiency and reliability. Such mechanisms may involve monitoring memory capacity, marking some stored content for deletion when capacity reaches a threshold, and other strategies to ensure optimal data management.

In some cases, quality auditor 205 may be configured to link original data to a reduced dataset. For example, quality auditor 205 may maintain metadata that links the original dataset to its reduced version. The metadata may include timestamps, unique identifiers, and other relevant information to ensure accurate comparison and traceability between the original and reduced datasets. Additionally, or alternatively, quality auditor 205 may implement a time-based policy for data deletion. After the comparison between the original and reduced datasets, if the reduced dataset is deemed adequate, the original data may be flagged for deletion after a predefined period. If the comparison fails, the data may be flagged for further review or a mechanism can be triggered to bypass the reduced dataset and replace it with the original dataset.

Additionally, or alternatively, quality auditor 205 may provide user-configurable options to retain datasets until they are marked as deletable. Users may set preferences for how long data should be retained, under what conditions it may be deleted, and any specific criteria for data retention. Additionally, or alternatively, quality auditor 205 may give certain events priorities that allow original datasets to be stored in archived storage. This ensures that critical data is preserved for future reference or analysis. System 200 may prioritize events based on their significance, ensuring that important data is not lost during the reduction process.

Systems and methods for providing adaptive dataset reduction for neural networks. In an illustrative, non-limiting embodiment, a delta-sigma modulator may include a Systems-on-Chip (SoC) having a processor and a memory coupled to the processor, the memory having program instructions stored thereon that, upon execution, cause the processor to: reduce a dataset received from a sensor; and as the dataset is received, at least one of: in response to an anomaly in the dataset being present in the reduced dataset, indicate a pass; or in response to the anomaly in the dataset being absent from the reduced dataset, indicate an error.

In various embodiments, systems and methods described herein dynamically reduce dataset size while ensuring data quality through mechanisms like anomaly detection and stress correlation. Unlike traditional methods, these approaches not only compress data but also evaluate its integrity, capturing significant events and preserving essential information. This adaptive strategy improves or optimizes data management for neural network training, reducing storage and transmission costs while maintaining accuracy and reliability.

Some embodiments may integrate a processor and memory within an SoC to enable real-time dataset reduction as data is received from sensors. This processing may reduce or minimize storage costs and accelerate neural network training. Such a system may indicate a pass or error based on the presence or absence of anomalies in the reduced dataset, providing quality assurance and preserving critical information. By implementing these operations directly on the SoC, the system offers a more responsive and adaptive approach, dynamically adjusting to data anomalies in real-time. This real-time reduction in turn reduces computational load and storage requirements, facilitating faster neural network training and deployment.

Additionally, systems and methods described herein may include a hardware memory device with program instructions that enable a processor to identify differences between anomalies in a dataset and its reduced version. This may allow for real-time assessment of data reduction quality, so that the reduced dataset retains essential characteristics of the original data. By comparing anomalies, the processor may dynamically adjust dataset reduction algorithms, optimizing data integrity and reliability for neural network training. The ability to determine whether the reduced dataset is adequate based on a threshold difference ensures critical information is preserved, preventing the loss of significant data during the reduction process.

In various embodiments, systems and methods described herein may be implemented as a dynamic attention mechanism for data collection. The determination of whether, or to what degree, the reduced dataset maintains its original characteristics (anomalies) may trigger attention and a corresponding adjustment in data reduction-which may be customized, selected, or learned in a particular context-to capture and address significant telemetry events efficiently.

In an illustrative, non-limiting embodiment, a delta-sigma modulator may include an SoC having a processor and a memory coupled to the processor, the memory having program instructions stored thereon that, upon execution, cause the processor to: reduce a dataset received from a sensor; and as the dataset is received, at least one of: in response to an anomaly in the dataset being present in the reduced dataset, indicate a pass; or in response to the anomaly in the dataset being absent from the reduced dataset, indicate an error.

For example, the sensor may include at least one of: a temperature sensor, a humidity sensor, an accelerometer, a microphone, an optical sensor, a GPS receiver, or an RF identification detector. Additionally, or alternatively, the sensor may be part of at least one of: an onboard diagnostics device, a vehicle dynamics device, a powertrain device, or an infotainment device.

In some cases, the dataset may be received via a CAN or Ethernet connection. To reduce the dataset, the program instructions, upon execution, may cause the processor to apply to the dataset a technique selected from the group consisting of: a direct compression, frequency domain analysis, randomized time domain analysis, and under-sampling.

The program instructions, upon execution, may cause the processor to apply, to the dataset, a peak detection technique to detect the anomaly in the dataset. The peak detection technique may be selected from the group consisting of: threshold-based detection, wavelet transform, and moving average filtering. Additionally, or alternatively, the program instructions, upon execution, further cause the processor to apply, to the dataset, a stress correlation technique to detect the anomaly in the dataset. The stress correlation technique may be selected from the group consisting of: rainflow counting, Arrhenius equation, and LSTM neural networks.

The program instructions, upon execution, may cause the processor to, in response to the anomaly being present in the reduced dataset, maintain a rate or amount of reduction of the dataset. The program instructions, upon execution, may also cause the processor to, in response to the anomaly being absent from the reduced dataset, decrease a rate or amount of reduction of the dataset. The program instructions, upon execution, may further cause the processor to, at least in part in response to a subsequent anomaly in the dataset being present in the reduced dataset, increase the rate or amount of reduction of the dataset.

In another illustrative, non-limiting embodiment, a hardware memory device may have program instructions stored thereon that, upon execution by a processor, cause the processor to: identify a difference between an anomaly in a dataset being received from a sensor and an anomaly in a reduced dataset; and at least one of: in response to the difference being smaller than a threshold, indicate that the reduced dataset is adequate; or in response to the difference being greater than the threshold, indicate that the reduced dataset is inadequate.

The program instructions, upon execution, may also cause the processor to, in response to the difference being smaller than the threshold, select a less aggressive dataset reduction parameter. For instance, the dataset reduction parameter may include at least one of: sampling rate, a compression ratio, a frequency resolution, or time window size. The program instructions, upon execution, may also cause the processor to, in response to the difference being greater than the threshold, select a more aggressive dataset reduction parameter.

In yet another illustrative, non-limiting embodiment, a method may include: reducing a neural network training dataset captured by a sensor in real-time; detecting an anomaly in the dataset; and determining if the reduced dataset is representative of the dataset, at least in part, by comparing the anomaly against the reduced dataset.

The method may include applying a peak detection technique and a stress correlation technique to detect the anomaly. The method may also include at least one of: in response to an anomaly in the dataset being present in the reduced dataset, indicating a pass; or in response to the anomaly in the dataset being absent from the reduced dataset, indicating an error. The method may further include at least one of: in response to a difference between an anomaly in a dataset received from a sensor and an anomaly in a reduced dataset being smaller than a threshold, indicating a pass; or in response to the difference being greater than the threshold, indicating an error.

In many implementations, systems and methods described herein may be incorporated into a wide range of electronic devices including, for example, computer systems or Information Technology (IT) products; consumer devices or appliances; scientific instrumentation; industrial robotics; medical or laboratory electronics; transportation vehicles such as automobiles, buses, trucks, trains, watercraft, aircraft, etc.; military equipment, etc.

For sake of brevity, conventional techniques have not been described in detail herein. Furthermore, the connecting lines shown in the various figures contained herein have been intended to illustrate relationships (e.g., logical) or physical couplings (e.g., electrical) between the various elements. It should be noted, however, that alternative relationships and connections may be used in other embodiments. Moreover, circuitry described herein may be implemented either in silicon or another semiconductor material or alternatively by software code representation thereof.

Although various systems and methods are described herein with reference to specific embodiments, modifications and changes may be made without departing from the scope of the present disclosure, as set forth in the claims below. Accordingly, the specification and figures are to be regarded in an illustrative rather than a restrictive sense, and all such modifications are intended to be included. Any benefits, advantages, or solutions to problems that are described herein regarding specific embodiments are not intended to be construed as a critical, required, or essential feature or element of any or all the claims.

Reference is made herein to "configuring" a device or a device "configured to" perform some operation(s). This may include selecting predefined logic blocks and logically associating them. It may also include programming computer software-based logic of a retrofit control device, wiring discrete hardware components, or a combination thereof. Such configured devices are physically designed to perform the specified operation(s).

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

## Claims

1. A Systems-on-Chip (SoC), comprising:
a processor; and
a memory coupled to the processor, the memory having program instructions stored thereon that, upon execution, cause the processor to:
reduce a dataset received from a sensor; and
as the dataset is received, at least one of:
in response to an anomaly in the dataset being present in the reduced dataset, indicate a pass; or
in response to the anomaly in the dataset being absent from the reduced dataset, indicate an error.

2. The SoC of claim 1, wherein the sensor comprises at least one of: a temperature sensor, a humidity sensor, an accelerometer, a microphone, an optical sensor, a GPS receiver, or an RF identification detector.

3. The SoC of claim 1 or 2, wherein the sensor is part of at least one of: an onboard diagnostics device, a vehicle dynamics device, a powertrain device, or an infotainment device.

4. The SoC of any preceding claim, wherein the dataset is received via a Controller Area Network (CAN) or Ethernet connection.

5. The SoC of any preceding claim, wherein to reduce the dataset, the program instructions, upon execution, further cause the processor to apply to the dataset a technique selected from the group consisting of: a direct compression, frequency domain analysis, randomized time domain analysis, and under-sampling.

6. The SoC of any preceding claim , wherein the program instructions, upon execution, further cause the processor to apply, to the dataset, a peak detection technique to detect the anomaly in the dataset.

7. The SoC of claim 6, wherein the peak detection technique is selected from the group consisting of: threshold-based detection, wavelet transform, and moving average filtering.

8. The SoC of any preceding claim , wherein the program instructions, upon execution, further cause the processor to apply, to the dataset, a stress correlation technique to detect the anomaly in the dataset.

9. The SoC of claim 8, wherein the stress correlation technique is selected from the group consisting of: rainflow counting, Arrhenius equation, and Long Short-Term Memory (LSTM) neural networks.

10. The SoC of any preceding claim , wherein the program instructions, upon execution, further cause the processor to, in response to the anomaly being present in the reduced dataset, maintain a rate or amount of reduction of the dataset.

11. The SoC of any preceding claim , wherein the program instructions, upon execution, further cause the processor to, in response to the anomaly being absent from the reduced dataset, decrease a rate or amount of reduction of the dataset.

12. The SoC of claim 11, wherein the program instructions, upon execution, further cause the processor to, at least in part in response to a subsequent anomaly in the dataset being present in the reduced dataset, increase the rate or amount of reduction of the dataset.

13. A method, comprising:
reducing a neural network training dataset captured by a sensor in real-time;
detecting an anomaly in the dataset; and
determining if the reduced dataset is representative of the dataset, at least in part, by comparing the anomaly against the reduced dataset.

14. The method of claim 13, further comprising applying a peak detection technique and a stress correlation technique to detect the anomaly.

15. The method of claim 13 or 14, further comprising at least one of:
in response to an anomaly in the dataset being present in the reduced dataset, indicating a pass; or
in response to the anomaly in the dataset being absent from the reduced dataset, indicating an error.
